# EUROPÄISCHE PATENTSCHRIFT

(11) **EP 2 602 160 B1**
(45) Veröffentlichungstag und Bekanntmachung des Hinweises auf die Patenterteilung: **14.01.2015**
(21) Anmeldenummer: 12007762.3
(22) Anmeldetag: 16.11.2012
(51) Int. Cl.: B60R 21/34, B60T 7/12

(54) **Verfahren zum Abbremsen eines Kraftfahrzeugs und Kraftfahrzeug**
Method for braking a motor vehicle and motor vehicle
Procédé de freinage d'un véhicule automobile et véhicule automobile

(30) Priorität: 07.12.2011 DE 102011120500
(43) Veröffentlichungstag der Anmeldung: 12.06.2013
(73) Patentinhaber: AUDI AG, 85045 Ingolstadt (DE)
(72) Erfinder: Roth, Franz, 93336 Altmannstein (DE); Stoll, Johann, 85123 Karlskron (DE); Horz, Verena, 85049 Ingolstadt (DE)
(74) Vertreter: Thielmann, Frank

(56) Entgegenhaltungen:
- EP-A1- 2 524 847
- DE-A1- 10 317 440
- DE-A1- 19 736 840
- DE-A1-102004 057 604
- DE-A1-102004 058 176
- DE-A1-102006 055 008
- DE-A1-102011 014 706
- DE-C1- 10 132 681
- US-A1- 2006 085 131

## Beschreibung

Die Erfindung betrifft ein Verfahren zum Betreiben eines Kraftfahrzeugs, bei welchem wenigstens einer zum Schutz eines Fußgängers vor den Folgen einer Kollision mit dem Kraftfahrzeug ausgebildeten Einrichtung ein Ansteuersignal übermittelt wird. Bei Umsetzung des Ansteuersignals wird die Einrichtung in eine den Schutz bereitstellende Funktionsstellung verbracht. Des Weiteren betrifft die Erfindung ein Kraftfahrzeug mit wenigstens einer solchen Einrichtung zum Schutz eines Fußgängers.

Die nach dem Anmeldetag der vorliegenden Anmeldung veröffentlichte EP 2 524 847 A1 beschreibt ein Fahrzeugkontrollsystem mit einem Sensor zum Erfassen einer bevorstehenden Kollision mit einem Fußgänger und einer Einrichtung zum Schutz des Fußgängers, etwa in Form eines Airbags. Beim Erfassen eines Zusammenstoßes mit dem Fußgänger sendet ein Steuergerät zeitgleich ein Ansteuersignal an die Einrichtung zum Schutz des Fußgängers und an ein Bremssystem des Fahrzeugs aus. Der Sensor ist dazu ausgelegt, einen Fußgänger, Radfahrer oder ein Tier vor dem Fahrzeug zu erfassen.

Die US 2006/0085131 A1 beschreibt ein System zum Vorhersagen eines Wegs, auf welchem sich ein Fahrzeug abhängig vom derzeitigen Fahrzeugzustand bewegen wird. Abhängig von diesem Weg werden Gegenmaßnahmen ergriffen, wenn sich ein Objekt wie etwa ein Fußgänger auf diesem Weg befindet. Die Gegenmaßnahmen können das Ansteuern eines Außenairbags und einer Bremseinrichtung durch eine Steuerungseinrichtung umfassen.

Die DE 10 2006 055 008 A1 beschreibt ein Airbagsteuergerät mit einer Schnittstelle zum Erfassen eines Signals einer Unfallsensorik. Eine Auswerteschaltung des Airbagsteuergeräts umfasst einen Airbagalgorithmus, welcher in Abhängigkeit vom Sensorsignal ein Ansteuersignal für Airbags und Gurtstraffer erzeugt. Die Auswerteschaltung umfasst des Weiteren eine Sicherheitsfunktion, welche vom Airbagalgorithmus die Information erhält, dass eine Kollision stattgefunden hat. Die Sicherheitsfunktion steuert eine Zündkreiselektronik an, welche ein Bremssystem mit einem Bremskraftverstärker und Radbremsen ansteuert.

Aus der DE 101 32 681 C1 ist ein Verfahren zur Klassifizierung eines Hindernisses anhand von Sensorsignalen bekannt, bei welchem in Abhängigkeit von der Hindernisklassifizierung ein automatischer Bremseingriff oder ein automatischer Lenkungseingriff erfolgt. Zusätzlich kann in Abhängigkeit von der Hindernisklassifizierung eine Auslösung von Fußgängerschutzmitteln erfolgen, etwa das Zünden eines Außenairbags. Wird anhand der Hindernisklassifizierung festgestellt, dass es sich bei einem Hindernis weder um einen Fußgänger noch um ein ortsfestes Objekt handelt, sondern um ein fahrendes Objekt, so werden die Lenkungseingriffe oder Bremseingriffe vorgenommen.

Des Weiteren beschreibt die DE 10 2009 035 984 A1 einen multifunktionalen Laufzeitsensor, welcher an der Frontseite eines Fahrzeugs untergebracht ist, und dessen Daten für eine Notbremsung und die Auslösung von aktiven oder passiven Schutzmaßnahmen verwendet werden, beispielsweise für das Auslösen eines Fußgängerschutzes.

Aufgabe der vorliegenden Erfindung ist es, ein Verfahren der eingangs genannten Art sowie ein zur Durchführung des Verfahrens ausgelegtes Kraftfahrzeug zu schaffen, mittels welchem sich ein besonders guter Schutz von Fußgängern und Fahrzeuginsassen erreichen lässt.

Diese Aufgabe wird durch ein Verfahren mit den Merkmalen des Patentanspruchs 1 und durch ein Kraftfahrzeug mit den Merkmalen des Patentanspruchs 9 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren wird aufgrund des Übermittelns des Ansteuersignal an die wenigstens eine zum Schutz des Fußgängers ausgebildete Einrichtung eine Bremseinrichtung des Kraftfahrzeugs von einer Steuerungseinrichtung angesteuert. Es wird also in Abhängigkeit von dem Ansteuern der Fußgängerschutz-Einrichtung eine autonome Notbremsung eingeleitet. Der Auslöser für das autonome Bremsen ist also nicht unmittelbar die Detektion des Fußgängers oder eines derartigen Verkehrsteilnehmers, sondern das Übermitteln des Ansteuersignals an die Einrichtung, welche zum Fußgängerschutz in ihre Funktionsstellung verbracht werden kann. Mit anderen Worten wird die Bremseinrichtung des Kraftfahrzeugs lediglich dann angesteuert, wenn der Einrichtung zum Schutz des Fußgängers das Ansteuersignal übermittelt wird, bei dessen Umsetzung die Einrichtung in die Funktionsstellung verbracht wird.

Die Einrichtung zum Schutz des Fußgängers stellt auch bei einer Kollision mit einem Radfahrer oder einem Tier Schutz für den Radfahrer oder das Tier bereit. Jedoch kommt das Kraftfahrzeug üblicherweise durch die Kollision mit dem Fußgänger, Radfahrer, Tier oder dergleichen Hindernis nicht zum Stillstand, wie dies im Gegensatz dazu bei einer Kollision des Kraftfahrzeugs mit einem weiteren Kraftfahrzeug als Unfallgegner der Fall ist. Daher verringert das in Abhängigkeit vom Auslösen der Einrichtung zum Fußgängerschutz eingeleitete Bremsmanöver die Gefahr einer anschließenden Kollision mit weiteren Verkehrsteilnehmern. Dies ist insbesondere dann von Vorteil, wenn durch das Verbringen der Einrichtung zum Fußgängerschutz in ihre Funktionsstellung die Sicht des Fahrers eingeschränkt ist, oder wenn die Einrichtung zum Fußgängerschutz fälschlich ausgelöst wurde.

Durch das Verlangsamen des Kraftfahrzeugs aufgrund der Ansteuerung der Bremseinrichtung verringert sich auch das Verletzungsrisiko von Fahrzeuginsassen bei einer im Anschluss an die Kollision mit dem Fußgänger oder dergleichen Hindernis erfolgenden Kollision mit dem weiteren Verkehrsteilnehmer. Auch für den Unfallpartner, also den Fußgänger, Radfahrer oder dergleichen, wird ein Abbau der Fahrgeschwindigkeit des Kraftfahrzeugs erreicht, sodass das Kraftfahrzeug im Verlauf der Kollision die Geschwindigkeit verringert. Dies bringt auch für diesen Unfallpartner eine Verringerung des Verletzungsrisikos mit sich.

Des Weiteren kann es nach der Kollision des Kraftfahrzeugs mit dem Fußgänger dazu kommen, dass der Fußgänger auf der Fahrbahn vor dem Kraftfahrzeug zu liegen kommt. Wird in einem solchen Fall aufgrund des rechtzeitig eingeleiteten Bremsmanövers das Kraftfahrzeug ausreichend abgebremst, so wird die Gefahr eines Überfahrenwerdens des Fußgängers deutlich reduziert. Es wird also durch das Einleiten der autonomen Notbremsung bei Auslösung der Einrichtung zum Fußgängerschutz ein besonders guter Schutz sowohl des Fußgängers oder eines derartigen Verkehrsteilnehmers als auch der Fahrzeuginsassen erreicht.

Beim Ansteuern der Bremseinrichtung wird ein Signal wenigstens eines Sensors berücksichtigt, mittels welchem ein in Fahrtrichtung hinter dem Kraftfahrzeug angeordnetes Objekt detektierbar ist. Dann kann nämlich das Abbremsen davon abhängig gemacht werden, ob der Rückraum des Kraftfahrzeugs entsprechend frei ist, so dass die Gefahr eines Auffahrunfalls besonders weitgehend reduziert ist.

In einer vorteilhaften Ausgestaltung der Erfindung wird aufgrund des Ansteuerns der Bremseinrichtung das Kraftfahrzeug über eine vorbestimmte Zeitspanne hinweg abgebremst. Eine solche autonome Notbremsung ist steuerungstechnisch besonders einfach zu implementieren.

Zusätzlich oder alternativ kann aufgrund des Ansteuerns der Bremseinrichtung das Kraftfahrzeug mit einer vorbestimmten negativen Beschleunigung abgebremst werden. Auch dies ist steuerungstechnisch besonders einfach umsetzbar. Zudem kann durch Vorgeben einer bestimmten Verzögerung sowohl die Geschwindigkeit des Kraftfahrzeugs besonders rasch und weitgehend abgebaut als auch das Verletzungsrisiko für die Fahrzeuginsassen besonders gut verringert werden.

Es kann auch das Kraftfahrzeug um einen vorbestimmten Betrag der Fahrgeschwindigkeit oder auf eine vorbestimmte Fahrgeschwindigkeit abgebremst werden. Hierbei ist insbesondere eine Reduktion der Fahrgeschwindigkeit um einen Betrag aus dem Intervall von 15 km/h bis 35 km/h besonders gut dazu geeignet, die Unfallschwere bei einer eventuellen Kollision mit einem weiteren Verkehrsteilnehmer gering zu halten. Beim Abbremsen des Kraftfahrzeugs auf die vorbestimmte Fahrgeschwindigkeit kann eine Endgeschwindigkeit von weniger als 40 km/h, insbesondere eine Endgeschwindigkeit von 20 km/h, vorgesehen sein, um die Unfallschwere gering zu halten.

Zusätzlich oder alternativ kann es vorgesehen sein, aufgrund des Ansteuerns der Bremseinrichtung das Kraftfahrzeug bis zu einem Zeitpunkt abzubremsen, an welchem ein Fahrer des Kraftfahrzeugs die Bremseinrichtung und/oder eine Lenkhandhabe des Kraftfahrzeugs betätigt. Wenn nämlich der Fahrer durch Bremsen und/oder Ausweichen die Fahrsituation wieder unter Kontrolle bekommt, so kann gegebenenfalls das autonome Bremsen eingestellt werden.

Eine besonders weitgehende Verringerung des Verletzungsrisikos des Fußgängers und/oder an einer möglichen Folgekollision beteiligter Verkehrsteilnehmer lässt sich erreichen, wenn gemäß einer weiteren vorteilhaften Ausgestaltung der Erfindung aufgrund des Ansteuerns der Bremseinrichtung das Kraftfahrzeug bis zum Stillstand abgebremst wird.

Bei einer solchen Bremsung bis zum Stillstand kann jedoch eine erhöhte Gefahr eines Auffahrunfalls gegeben sein. Eine derartige Bremsung des Kraftfahrzeugs kann vorgenommen werden, weil das Kraftfahrzeug über den Sensor verfügt, mittels welchem in Fahrtrichtung hinter dem Kraftfahrzeug angeordnete Objekte detektiert werden können. Es kann nämlich das Abbremsen bis zum Stillstand davon abhängig gemacht werden, ob der Rückraum des Kraftfahrzeugs entsprechend frei ist, so dass die Gefahr eines Auffahrunfalls besonders weitgehend reduziert ist.

Von Vorteil ist es weiterhin, wenn ein Druck in einem Druckmedium der Bremseinrichtung erhöht wird, sobald mittels wenigstens eines Sensors in einer Trajektorie des Kraftfahrzeugs ein Objekt detektiert wird. Durch ein solches Vorkonditionieren der Bremseinrichtung reagiert diese besonders schnell, wenn das Kraftfahrzeug tatsächlich mit dem detektierten Objekt kollidiert und so die Einrichtung zum Fußgängerschutz ausgelöst und als Konsequenz dieses Auslösens die autonome Notbremsung eingeleitet wird.

Schließlich hat es sich als vorteilhaft gezeigt, wenn das Ansteuersignal einem Steuergerät eines Außenairbags des Kraftfahrzeugs übermittelt wird. Ein solcher Außenairbag oder Scheibenairbag deckt in seiner Funktionsstellung insbesondere harte Bereiche der Fahrzeugfront ab, welche nicht oder nur sehr schwer deformationsweich gestaltet werden können. Durch den Außenairbags wird zumindest ein Teilbereich der Frontscheibe mit abgedeckt. Durch einen solchen Airbag lässt sich ein besonders guter Schutz von Fußgängern, Radfahrern und anderen nicht durch ein Fahrzeug geschützten Verkehrsteilnehmern erreichen. Insbesondere zusätzlich kann als Einrichtung zum Fußgängerschutz eine Motorhaube des Kraftfahrzeugs angehoben werden.

Das erfindungsgemäße Kraftfahrzeug umfasst wenigstens eine Einrichtung zum Schutz eines Fußgängers vor den Folgen einer Kollision mit dem Kraftfahrzeug, wobei die wenigstens eine Einrichtung durch Umsetzen eines Ansteuersignals in eine den Schutz bereitstellende Funktionsstellung verbringbar ist. Das Kraftfahrzeug umfasst des Weiteren eine Steuerungseinrichtung, welche dazu ausgelegt ist, aufgrund des Übermittelns des Ansteuersignals an die wenigstens eine zum Schutz des Fußgängers ausgebildete Einrichtung eine Bremseinrichtung des Kraftfahrzeugs anzusteuern und so das Kraftfahrzeug abzubremsen. Die Steuerungseinrichtung ist dazu ausgelegt, beim Ansteuern der Bremseinrichtung ein Signal wenigstens eines Sensors zu berücksichtigen, mittels welchem ein in Fahrtrichtung hinter dem Kraftfahrzeug angeordnetes Objekt detektierbar ist.

Die für das erfindungsgemäße Verfahren beschriebenen Vorteile und bevorzugten Ausführungsformen gelten auch für das erfindungsgemäße Kraftfahrzeug.

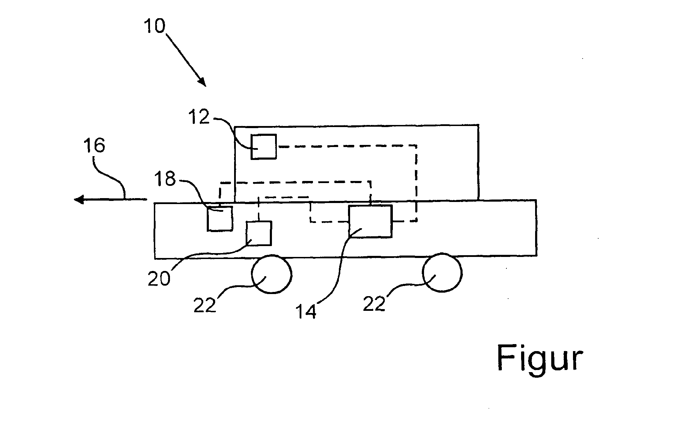

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt schematisiert ein Kraftfahrzeug, welches einen Scheibenairbag aufweist, wobei ein Steuergerät des Kraftfahrzeugs beim Auslösen des Scheibenairbags autonom eine Betriebsbremse des Kraftfahrzeugs ansteuert und so eine Notbremsung einleitet.

Ein in der Figur schematisch gezeigtes Kraftfahrzeug 10 umfasst wenigstens einen Sensor 12, dessen Signale an ein Steuergerät 14 übermittelt werden. Der Sensor 12 kann zum Erfassen von Parametern ausgelegt sein, welche das Kraftfahrzeug 10 betreffen, also etwa als Beschleunigungssensor oder als Drucksensor ausgebildet sein und so einen bevorstehenden Aufprall oder einen Aufprall detektieren. Auch kann mittels des Sensors 12 die Intrusion eines Hindernisses in das Kraftfahrzeug 10 festgestellt und ein entsprechendes Signal an das Steuergerät 14 übermittelt werden.

Zusätzlich oder alternativ kann als Sensor 12 wenigstens eine vorausschauende Einrichtung zum Einsatz kommen, bei welcher anhand einer Verarbeitung von Bildern Signale generiert werden, welche vor einem bevorstehenden Aufprall warnen. Es kann auch ein Sensor 12 vorgesehen sein, welcher Radar- oder Infrarotstrahlung nutzt, um ein sich vor dem Kraftfahrzeug 10 befindendes Hindernis zu detektieren. Eine Fahrtrichtung des Kraftfahrzeugs 10 ist in der Figur durch einen Bewegungspfeil 16 veranschaulicht.

Wenn aufgrund der Auswertung der Signale des wenigstens einen Sensors 12 durch das Steuergerät 14 festgestellt wird, dass das Kraftfahrzeug 10 auf einen ungeschützten Verkehrsteilnehmer wie einen Fußgänger oder Radfahrer auftreffen wird, wird von dem Steuergerät 14 ein Scheibenairbag 18 angesteuert. Wenn der Scheibenairbag 18 gezündet wird, so deckt er harte Bereiche der Fahrzeugfront ab sowie zumindest einen Teilbereich einer Frontscheibe des Kraftfahrzeugs 10. Dadurch wird der Fußgänger oder Radfahrer beim Aufprall auf die Motorhaube und/oder die Frontscheibe des Kraftfahrzeugs 10 vor Verletzungen geschützt.

Um den Schutz für den Fußgänger oder Radfahrer weiter zu verbessern, wird von dem Steuergerät 14 zusätzlich eine Betriebsbremse 20 angesteuert, welche auf die Räder 22 des Kraftfahrzeugs 10 wirkt.

Vorliegend erfolgt die Übermittlung eines entsprechenden Signals, welches ein Betätigen der Betriebsbremse 20 bewirkt, in Abhängigkeit davon, ob an den Scheibenairbag 18 ein Ansteuersignal übermittelt wird, welches zu dessen Auslösen führt. Dadurch, dass zugleich mit der Zündung des Scheibenairbags 18 eine autonome Notbremsung durch Ansteuern der Betriebsbremse 20 eingeleitet wird, wird die Fahrgeschwindigkeit des Kraftfahrzeugs 10 bedeutend reduziert, und bei der Kollision mit dem Fußgänger oder Radfahrer wird das Verletzungsrisiko stark herabgesetzt. Auch wird die Gefahr reduziert, dass der ungeschützte Verkehrsteilnehmer, wenn er nach dem Aufprall auf das Kraftfahrzeug 10 vor diesem zu liegen kommt, von dem Kraftfahrzeug 10 überfahren wird.

Die durch Ansteuern der Betriebsbremse 20 verringerte Fahrgeschwindigkeiten des Kraftfahrzeugs 10 senkt auch generell die Gefahr einer Folgekollision des Kraftfahrzeugs 10 mit anderen Verkehrsteilnehmern als dem zunächst betroffenen, ungeschützten Verkehrsteilnehmer. Dies verringert auch das Verletzungsrisiko für die Fahrzeuginsassen des Kraftfahrzeugs 10 bedeutend.

Bei einer Fahrt mit dem Kraftfahrzeug 10 in geschlossenen Ortschaften können beispielsweise etwa 40 km/h an Fahrzeuggeschwindigkeiten abgebaut werden, indem über das Steuergerät 14 die Betriebsbremse 20 angesteuert wird. Bei der dann noch verbleibenden geringen Fahrgeschwindigkeit des Kraftfahrzeugs 10 ist die Schwere einer etwaigen Folgekollision mit einem anderen Verkehrsteilnehmer besonders gering. Das Kraftfahrzeug 10 kann durch die autonome Notbremsung je nach Ausgangsgeschwindigkeit auch bis zum völligen Stillstand verzögert werden.

Das Steuergerät 14 kann anhand eines Algorithmus die Entscheidung zur Auslösung des Scheibenairbags 18 treffen und in Abhängigkeit vom Treffen dieser Entscheidung ein eine Bremsanforderung beinhaltendes Signal an ein Bremssteuergerät der Betriebsbremse 20 weitergeben. Alternativ kann die Entscheidung, den Scheibenairbag 18 zu zünden, sowohl zur Auslösung des Scheibenairbags 18 als auch zur Auslösung der autonomen Notbremsung verwendet werden. Hierbei kann also ein Signal beide Steuerbefehle enthalten, nämlich das Entzünden eines Zündmechanismus in einem Gasgenerator des Scheibenairbags 18 und das Betätigen der Betriebsbremse 20.

Insbesondere, wenn der Sensor 12 oder ein weiterer Sensor dazu ausgelegt ist, die in Fahrtrichtung vor dem Kraftfahrzeug 10 liegende Umgebung zu erfassen, kann bei einem bevorstehenden Aufprall die Betriebsbremse 20 vorkonditioniert werden, etwa in dem ein Bremsdruck erhöht wird. Dann spricht die Betriebsbremse 20 schneller an, wenn anschließend über das Steuergerät 14 das Signal zur Bremsung übermittelt wird.

## Patentansprüche

1. Verfahren zum Betreiben eines Kraftfahrzeugs (10), bei welchem wenigstens einer zum Schutz eines Fußgängers vor den Folgen einer Kollision mit dem Kraftfahrzeug (10) ausgebildeten Einrichtung (18) ein Ansteuersignal übermittelt wird, bei dessen Umsetzung die Einrichtung (18) in eine den Schutz bereitstellende Funktionsstellung verbracht wird,
wobei
aufgrund des Übermittelns des Ansteuersignals an die wenigstens eine zum Schutz des Fußgängers ausgebildete Einrichtung (18) eine Bremseinrichtung (20) des Kraftfahrzeugs (10) von einer Steuerungseinrichtung (14) angesteuert wird, wobei beim Ansteuern der Bremseinrichtung (20) ein Signal wenigstens eines Sensors berücksichtigt wird, mittels welchem ein in Fahrtrichtung hinter dem Kraftfahrzeug (10) angeordnetes Objekt detektierbar ist.

2. Verfahren nach Anspruch 1,
**dadurch gekennzeichnet, dass**
aufgrund der Ansteuerns der Bremseinrichtung (20) das Kraftfahrzeug (10) über eine vorbestimmte Zeitspanne hinweg abgebremst wird.

3. Verfahren nach Anspruch 1 oder 2,
**dadurch gekennzeichnet, dass**
aufgrund der Ansteuerns der Bremseinrichtung (20) das Kraftfahrzeug (10) mit einer vorbestimmten negativen Beschleunigung abgebremst wird.

4. Verfahren nach einem der Ansprüche 1 bis 3,
**dadurch gekennzeichnet, dass**
aufgrund der Ansteuerns der Bremseinrichtung (20) das Kraftfahrzeug (10) um einen vorbestimmten Betrag der Fahrgeschwindigkeit und/oder auf eine vorbestimmte Fahrgeschwindigkeit abgebremst wird.

5. Verfahren nach einem der Ansprüche 1 bis 4,
**dadurch gekennzeichnet, dass**
aufgrund der Ansteuerns der Bremseinrichtung (20) das Kraftfahrzeug (10) bis zu einem Zeitpunkt abgebremst wird, an welchem ein Fahrer des Kraftfahrzeugs (10) die Bremseinrichtung (20) und/oder eine Lenkhandhabe des Kraftfahrzeugs (10) betätigt.

6. Verfahren nach einem der Ansprüche 1 bis 5,
**dadurch gekennzeichnet, dass**
aufgrund der Ansteuerns der Bremseinrichtung (20) das Kraftfahrzeug (10) bis zum Stillstand abgebremst wird.

7. Verfahren nach einem der Ansprüche 1 bis 6,
**dadurch gekennzeichnet, dass**
ein Druck in einem Druckmedium der Bremseinrichtung (20) erhöht wird, wenn mittels wenigstens eines Sensors (12) in einer Trajektorie des Kraftfahrzeugs (10) ein Objekt detektiert wird.

8. Verfahren nach einem der Ansprüche 1 bis 7,
**dadurch gekennzeichnet, dass**
das Ansteuersignal einem Steuergerät eines Außenairbags (18) des Kraftfahrzeugs (10) übermittelt wird.

9. Kraftfahrzeug (10) mit wenigstens einer Einrichtung (18) zum Schutz eines Fußgängers vor den Folgen einer Kollision mit dem Kraftfahrzeug (10), wobei die wenigstens eine Einrichtung (18) durch Umsetzen eines Ansteuersignals in eine den Schutz bereitstellende Funktionsstellung verbringbar ist, und mit einer
Steuerungseinrichtung (14), welche dazu ausgelegt ist, aufgrund des Übermittelns des Ansteuersignals an die wenigstens eine zum Schutz des Fußgängers ausgebildete Einrichtung (18) eine Bremseinrichtung (20) des Kraftfahrzeugs (10) anzusteuern, wobei die Steuerungseinrichtung (14) dazu ausgelegt ist, beim Ansteuern der Bremseinrichtung (20) ein Signal wenigstens eines Sensors zu berücksichtigen, mittels welchem ein in Fahrtrichtung hinter dem Kraftfahrzeug (10) angeordnetes Objekt detektierbar ist.

## Claims

1. Method for operating a motor vehicle (10) in which a trigger signal is transmitted to at least one device (18) designed to protect a pedestrian from the consequences of a collision with the motor vehicle (10), upon the implementation of which signal the device (18) is brought into a functional position for providing protection, wherein
a brake device (20) of the motor vehicle (10) is activated by a control device (14) as a result of the transmission of the trigger signal to the at least one device (18) designed to protect the pedestrian, wherein a signal from at least one sensor is taken into account when activating the brake device (20), by means of which sensor an object located behind the motor vehicle (10) in the direction of travel can be detected.

2. Method according to claim 1,
**characterised in that**
the motor vehicle (10) is decelerated over a predefined time interval as a result of the activation of the brake device (20).

3. Method according to either claim 1 or claim 2,
**characterised in that**
the motor vehicle (10) is decelerated at a predetermined negative acceleration as a result of the activation of the brake device (20).

4. Method according to any of claims 1 to 3,
**characterised in that**
the motor vehicle (10) is decelerated by a predetermined proportion of the travel speed and/or to a predetermined travel speed as a result of the activation of the brake device (20).

5. Method according to any of claims 1 to 4,
**characterised in that**
the motor vehicle (10) is decelerated as a result of the activation of the brake device (20) until a time at which a driver of the motor vehicle (10) operates the brake device (20) and/or a steering handle of the motor vehicle (10).

6. Method according to any of claims 1 to 5,
**characterised in that**
the motor vehicle (10) is decelerated to a standstill as a result of the activation of the brake device (20).

7. Method according to any of claims 1 to 6,
**characterised in that**
a pressure in a pressure medium of the brake device (20) is increased when an object in a trajectory of the motor vehicle (10) is detected by at least one sensor (12).

8. Method according to any of claims 1 to 7,
**characterised in that**
the trigger signal is transmitted to a control unit of an outside airbag (18) of the motor vehicle (10).

9. Motor vehicle (10) comprising at least one device (18) for protecting a pedestrian from the consequences of a collision with the motor vehicle (10), wherein the at least one device (18) can be brought into a functional position for providing protection upon the implementation of a trigger signal,
and comprising a control device (14) designed to activate a brake device (20) of the motor vehicle (10) as a result of the transmission of the trigger signal to the at least one device (18) designed to protect the pedestrian, wherein the control device (14) is designed to take into account a signal from at least one sensor when activating the brake device (20), by means of which sensor an object located behind the motor vehicle (10) in the direction of travel can be detected.

## Revendications

1. Procédé de commande d'un véhicule automobile (10), dans lequel il est transmis à au moins un dispositif (18) conçu pour protéger un piéton des suites d'une collision avec le véhicule (10) un signal de commande dont la conversion a pour effet d'amener le dispositif (18) dans une position fonctionnelle assurant la protection,
dans lequel, à la suite de la transmission du signal de commande au au moins un dispositif (18) conçu pour protéger le piéton, un dispositif de freinage (20) du véhicule automobile (10) est commandé par un dispositif de commande (14), dans lequel, lors de la commande du dispositif de freinage (20), on fait intervenir un signal d'au moins d'un capteur, à l'aide duquel un objet situé derrière le véhicule automobile (10) dans le sens de la conduite peut être détecté.

2. Procédé selon la revendication 1,
caractérisé en ce qui :
en raison de la commande du dispositif de freinage (20), le véhicule automobile (10) est freiné sur un intervalle de temps prédéterminé.

3. Procédé selon la revendication 1 ou la revendication 2,
**caractérisé en ce que** :
en raison de la commande du dispositif de freinage (20), le véhicule automobile (10) est freiné avec une accélération négative prédéterminée.

4. Procédé selon l'une quelconque des revendications 1 à 3,
**caractérisé en ce que** :
en raison de la commande du dispositif de freinage (20), le véhicule automobile (10) est freiné d'une quantité prédéterminée de la vitesse de conduite et/ou à une vitesse de conduite prédéterminée.

5. Procédé selon l'une quelconque des revendications 1 à 4,
**caractérisé en ce que** :
en raison de la commande du dispositif de freinage (20), le véhicule automobile (10) est freiné jusqu'à un point donné, où un conducteur du véhicule automobile (10) commande le dispositif de freinage (20) et/ou une manette de direction du véhicule automobile (10).

6. Procédé selon l'une quelconque des revendications 1 à 5,
**caractérisé en ce que** :
en raison de la commande du dispositif de freinage (20), le véhicule automobile (10) est freiné jusqu'à l'arrêt.

7. Procédé selon l'une quelconque des revendications 1 à 6,
**caractérisé en ce que** :
une pression est augmentée dans un agent de pression du dispositif de freinage (20) lorsqu'un objet est détecté dans une trajectoire du véhicule automobile (10) au moyen d'au moins un capteur (12).

8. Procédé selon l'une quelconque des revendications 1 à 7,
**caractérisé en ce que** :
le signal de commande est transmis à un appareil de commande d'un coussin d'air externe (18) du véhicule automobile (10).

9. Véhicule automobile (10) comprenant au moins un dispositif (18) pour protéger un piéton des suites d'une collision avec le véhicule automobile (10), dans lequel le au moins un dispositif (18) peut être amené dans une position fonctionnelle assurant la protection par conversion d'un signal de commande, et un dispositif de commande (14), qui est conçu pour commander, en raison de la transmission du signal de commande au dispositif (18) conçu pour la protection du piéton, un dispositif de freinage (20) du véhicule automobile (10), dans lequel le dispositif de commande (14) est conçu, lors de la commande du dispositif de freinage (20), pour faire intervenir un signal d'au moins un capteur, au moyen duquel un objet situé derrière le véhicule automobile (10) dans le sens de conduite peut être détecté.
